# EUROPÄISCHE PATENTSCHRIFT

(11) **EP 2 619 334 B1**
(45) Veröffentlichungstag und Bekanntmachung des Hinweises auf die Patenterteilung: **17.12.2014**
(21) Anmeldenummer: 11751842.3
(22) Anmeldetag: 11.08.2011
(51) Int. Cl.: C21C 5/38, C21C 5/52, F22B 1/06, F27B 3/26, F27D 17/00, F28D 20/00

(54) **BETRIEBSVERFAHREN ZUR VERWERTUNG DER THERMISCHEN ABWÄRME FÜR EINE ANLAGE DER GRUNDSTOFFINDUSTRIE**
OPERATING METHOD FOR UTILIZING THE THERMAL WASTE HEAT FOR A PLANT IN THE BASIC MATERIALS INDUSTRY
PROCÉDÉ D'EXPLOITATION POUR L'UTILISATION DE LA CHALEUR THERMIQUE PERDUE POUR UNE INSTALLATION DE L'INDUSTRIE DES MATIÈRES PREMIÈRES

(30) Priorität: 24.09.2010 AT 16022010
(43) Veröffentlichungstag der Anmeldung: 31.07.2013
(73) Patentinhaber: Siemens VAI Metals Technologies GmbH, 4031 Linz (AT)
(72) Erfinder: ENICKL, Gerhard, A-4407 Dietach (AT); HAMPEL, Alfred, A-4040 Linz (AT); HAIDER, Markus, A-1130 Wien (AT)
(74) Vertreter: Maier, Daniel Oliver
(86) Internationale Anmeldenummer: PCT/EP2011/063811
(87) Internationale Veröffentlichungsnummer: WO 2012/038151

(56) Entgegenhaltungen:
- EP-A1- 0 564 731
- DE-A1-102010 002 523
- JP-A- 59 160 012
- US-A- 4 257 579

## Beschreibung

Die vorliegende Erfindung betrifft ein Betriebsverfahren für eine Anlage der Grundstoffindustrie,
- wobei ein Basisteil der Anlage gemäß einem Anlagenzyklus betrieben wird,
- wobei während der Anlagenzyklen in einer ersten Phase des jeweiligen Anlagenzyklus heiße Abgase entstehen und in einer zweiten Phase des jeweiligen Anlagenzyklus entweder keine heißen Abgase entstehen oder die heißen Abgase gegenüber der ersten Phase nur in erheblich verringertem Umfang entstehen,
- wobei die heißen Abgase in dem jeweiligen Umfang, in dem sie entstehen, über ein Rohrleitungssystem aus dem Basisteil der Anlage abgeführt und an die Außenluft abgegeben werden,
- wobei zumindest in der ersten Phase geschmolzenes Salz einem ersten Tankbehälter entnommen wird, sodann zum direkten oder indirekten Kühlen eines ersten Abschnitts des Rohrleitungssystems verwendet wird, das geschmolzene Salz dadurch aufgeheizt wird und das geschmolzene Salz im aufgeheizten Zustand einem zweiten Tankbehälter zugeführt wird,
- wobei das Rohrleitungssystem in einem zweiten Abschnitt anders als mit geschmolzenem Salz gekühlt wird,
- wobei der erste Abschnitt des Rohrleitungssystems zwischen dem Basisteil der Anlage und dem zweiten Abschnitt des Rohrleitungssystems angeordnet ist,
- wobei in einem Verdampfer vorgewärmtes Wasser verdampft, in einem Überhitzer der Dampf überhitzt und der überhitzte Dampf einer Lasteinrichtung zugeführt wird, der Dampf nach dem Durchströmen der Lasteinrichtung in einem Kondensator zu Wasser kondensiert wird und in einem Vorwärmer das kondensierte Wasser vorgewärmt wird,
- wobei zumindest das Zuführen des überhitzten Dampfes zur Lasteinrichtung kontinuierlich erfolgt,
- wobei zum Überhitzen des Dampfes zumindest in der zweiten Phase des Anlagenzyklus das geschmolzene Salz dem zweiten Tankbehälter entnommen wird, dem Überhitzer zugeführt wird und sodann dem ersten Tankbehälter oder einem dritten Tankbehälter zugeführt wird,
- wobei zum Verdampfen des Wassers in der zweiten Phase des Anlagenzyklus das geschmolzene Salz dem zweiten Tankbehälter oder dem dritten Tankbehälter entnommen wird, dem Verdampfer zugeführt wird und sodann dem ersten Tankbehälter zugeführt wird.

Ein derartiges Betriebsverfahren ist aus der GB 972 720 A bekannt.

Die Hauptproblematik bei der Energieverwertung aus der Abwärme von Lichtbogenöfen liegt in der diskontinuierlichen und nur schwer steuerbaren Energieemission der Lichtbogenöfen, den starken Temperaturschwankungen der Abgase und deren hohen Staubbeladung.

Der Lichtbogenofenprozess ist ein Batchprozess, bei dem abgasseitig (je nach Ofendesign und Ofenbetriebsart) ein- bis zweimal pro Stunde die Emission an thermischer Leistung zwischen einem Maximalwert (Emissionsphase) und Null (Emissionspause) schwankt. Da die Aggregate zur Umwandlung von thermischer Energie in mechanische Energie (in der Regel Turbinen) empfindlich gegenüber starken Leistungs- und Temperaturschwankungen sind und weiterhin die Synchronisation eines von der Turbine angetriebenen elektrischen Generators mit einem externen Netz Zeit benötigt, müssen die Turbinen, wenn sie einmal die Synchrondrehzahl erreicht haben, auf dieser Drehzahl gehalten werden, um stabil elektrische Energie in das externe Netz einspeisen zu können. Es muss daher Energie aus den Emissionsphasen gespeichert werden, um in den Emissionspausen zur Verfügung zu stehen.

Die aus der oben genannten GB-Schrift genannte Lösung ist schon recht gut, aber noch nicht optimal. Insbesondere kann die Wärme des Abgases bei niedrigen Temperaturen nicht mehr genutzt werden.

Aus der EP 0 564 731 A1 ist ein Betriebsverfahren für eine Anlage der Grundstoffindustrie bekannt,
- wobei ein Basisteil der Anlage gemäß einem Anlagenzyklus betrieben wird,
- wobei während der Anlagenzyklen in einer ersten Phase des jeweiligen Anlagenzyklus heiße Abgase entstehen und in einer zweiten Phase des jeweiligen Anlagenzyklus entweder keine heißen Abgase entstehen oder die heißen Abgase gegenüber der ersten Phase nur in erheblich verringertem Umfang entstehen,
- wobei die heißen Abgase in dem jeweiligen Umfang, in dem sie entstehen, über ein Rohrleitungssystem aus dem Basisteil der Anlage abgeführt und an die Außenluft abgegeben werden,
- wobei zumindest in der ersten Phase geschmolzenes Salz einem ersten Tankbehälter entnommen wird, sodann zum direkten oder indirekten Kühlen eines ersten Abschnitts des Rohrleitungssystems verwendet wird, das geschmolzene Salz dadurch aufgeheizt wird,
- wobei das Rohrleitungssystem in einem zweiten Abschnitt anders als mit geschmolzenem Salz gekühlt wird,
- wobei der erste Abschnitt des Rohrleitungssystems zwischen dem Basisteil der Anlage und dem zweiten Abschnitt des Rohrleitungssystems angeordnet ist,
- wobei in einem Verdampfer vorgewärmtes Wasser verdampft, in einem Überhitzer der Dampf überhitzt und der überhitzte Dampf einer Lasteinrichtung zugeführt wird, der Dampf nach dem Durchströmen der Lasteinrichtung in einem Kondensator zu Wasser kondensiert wird und in einem Vorwärmer das kondensierte Wasser vorgewärmt wird,
- wobei zumindest das Zuführen des überhitzten Dampfes zur Lasteinrichtung kontinuierlich erfolgt und
- wobei das geschmolzene Salz nach dem Kühlen des ersten Abschnitts des Rohrleitungssystems dem Überhitzer zugeführt wird, sodann dem Verdampfer zugeführt wird und schließlich wieder dem ersten Tankbehälter zugeführt wird.

Die Aufgabe der vorliegenden Erfindung besteht darin, Möglichkeiten zu schaffen, mittels derer insbesondere der Wirkungsgrad bei der Verwertung der thermischen Abwärme vergrößert wird.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 9.

Bevorzugt haben die heißen Abgasen eine Temperatur von über 400°C, besonders bevorzugt von über 450°C, und ganz besonders bevorzugt von über 500°C.

Erfindungsgemäß ist vorgesehen, ein Betriebsverfahren der eingangs genannten Art dadurch auszugestalten, dass in der ersten Phase des Anlagenzyklus das Verdampfen des vorgewärmten Wassers mittels der den zweiten Abschnitt des Rohrleitungssystems durchströmenden, bereits mittels des geschmolzenen Salzes direkt oder indirekt vorgekühlten Abgase erfolgt.

Insbesondere wird durch diese Maßnahme erreicht, dass der Energieinhalt der heißen Abgase besser genutzt wird. Dadurch kann ein effizienter kontinuierlicher Betrieb der Turbine auf einfache Weise erreicht werden.

Vorzugweise ist die Last der Lasteinrichtung während der zweiten Phase des Anlagenzyklus niedriger als während der ersten Phase des Anlagenzyklus. Dadurch kann das Ausmaß an erforderlicher Speicherkapazität für das geschmolzene Salz minimiert werden.

Vorzugsweise ist die Last der Lasteinrichtung während der zweiten Phase des Anlagenzyklus mindestens 30 % der Last während der ersten Phase des Anlagenzyklus. Dadurch kann einerseits ein stabiler Betrieb der Lasteinrichtung zuverlässig gewährleistet werden, andererseits kann dennoch die Speicherkapazität für das erhitzte geschmolzene Salz (und auch für das auf Siedetemperatur gehaltene Speisewasser) auf relativ niedrigem Niveau gehalten werden.

Vorzugsweise sind die Tankbehälter tiefer angeordnet als der erste Abschnitt des Rohrleitungssystems, der Verdampfer und der Überhitzer. Dadurch wird erreicht, dass eine Selbstentleerung des Leitungssystems für das geschmolzene Salz bewirkt werden kann, wenn dies - beispielsweise bei Wartungs- oder Reparaturarbeiten - erforderlich ist.

Vorzugsweise ist dem geschmolzenen Salz in den Tankbehältern ein Inertgaspolster (beispielsweise ein Stickstoffpolster) überlagert. Dadurch ist ein einerseits druckoptimierter und andererseits dennoch abgedichteter Betrieb der Salzkreisläufe möglich.

Vorzugsweise sind die Tankbehälter zumindest in ihrem unteren Bereich und in ihrem oberen Bereich miteinander verbunden, so dass innerhalb der Tankbehälter ein selbsttätiger Niveauausgleich erfolgt.

Sofern der dritte Tankbehälter vorhanden ist, ist vorzugsweise vorgesehen, dass geschmolzenes Salz dem ersten Tankbehälter entnommen und einem dritten Abschnitt des Rohrleitungssystems zugeführt wird, der zwischen dem ersten und dem zweiten Abschnitt des Rohrleitungssystems angeordnet ist, dass dadurch das den dritten Abschnitt durchströmende Abgas gekühlt und das geschmolzene Salz aufgeheizt wird und dass dieses Salz nach dem Aufheizen dem dritten Tankbehälter zugeführt wird. Dadurch kann die Ausnutzung der in den heißen Abgasen enthaltenen thermischen Energie noch weiter optimiert werden.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine Anlage der Grundstoffindustrie,
- FIG 2: schematisch einen Anlagenzyklus,
- FIG 3: einen Abschnitt des Abgassystems der Anlage von FIG 1 sowie die an das Abgassystem angekoppelten Aggregate und
- FIG 4: eine alternative Ausgestaltung des Abgassystems.

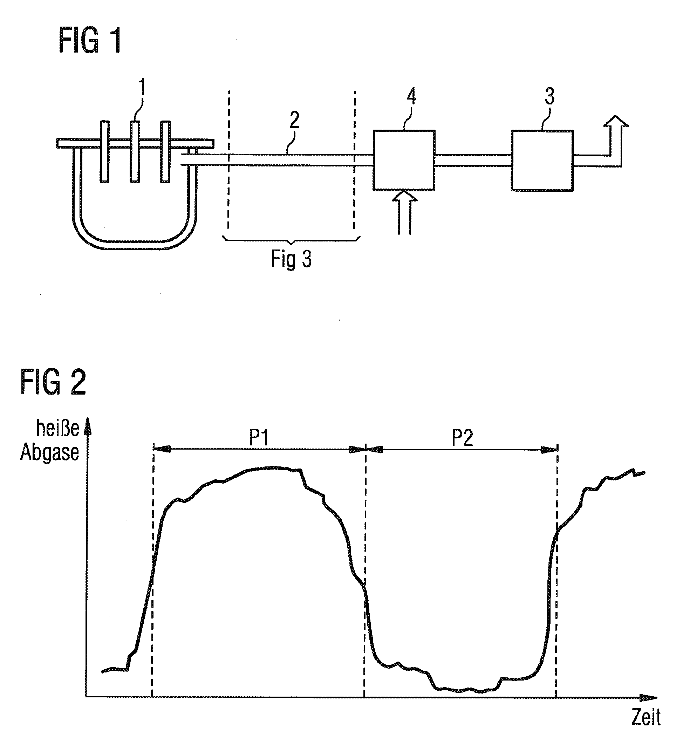

FIG 1 zeigt in stark vereinfachter Darstellung eine Anlage der Grundstoffindustrie. Gemäß FIG 1 weist die Anlage ein Basisteil 1 auf. Das Basisteil 1 wird gemäß FIG 2 in einem Anlagenzyklus betrieben. Gemäß FIG 2 weist der Anlagenzyklus zumindest eine erste Phase P1 und eine zweite Phase P2 auf. In der ersten Phase P1 des jeweiligen Anlagenzyklus entstehen auf Grund des im Basisteil 1 ablaufenden technischen Prozesses der Grundstoffindustrie im Basisteil 1 heiße Abgase. Es ist möglich, dass in der zweiten Phasen P2 des jeweiligen Anlagenzyklus im Basisteils 1 keine heißen Abgase entstehen. Alternativ ist es möglich, dass die Abgase zwar entstehen, aber nur in erheblich geringfügigerem Umfang entstehen als in der ersten Phase P1. Insbesondere entsteht im Durchschnitt während der zweiten Phase P2 maximal ein Sechstel der Menge an heißen Abgasen wie im Durchschnitt der ersten Phase P1.

Die Phasen P1, P2 sind nach Bedarf bestimmt. In der Regel beträgt die Dauer der Phase 2 an der Gesamtzeit des Anlagenzyklus maximal 30 %, insbesondere maximal 25 %.

Die Darstellung von FIG 2 ist ebenfalls vereinfacht. Insbesondere ist es möglich, dass die Anzahl an ersten Phasen P1 und zweiten Phasen P2 während eines Anlagenzyklus größer als Eins ist. Dies wird nachstehend anhand eines typischen Basisteils 1 näher erläutert, nämlich eines Basisteils 1 in Form eines elektrischen Lichtbogenofens.

Bei einem elektrischen Lichtbogenofen erfolgt der Betrieb typischerweise in der Abfolge der Phasen
a) Abstechen und Teilchargieren,
b) Schmelzen der Teilcharge,
c) Vollchargieren und
d) Schmelzen der Gesamtcharge nebst Refining.

Während der Phasen Abstechen und Teilchargieren sowie Vollchargieren entstehen nur in geringem Umfang heiße Abgase. Während der beiden Schmelzphasen entstehen in erheblichem Umfang heiße Abgase.

### Typische Zeitdauern sind beispielsweise

- für den gesamten Anlagenzyklus eine Stunde oder knapp darunter,
- für das Abstechen und Teilchargieren rund 10 Minuten,
- für das Schmelzen der Teilcharge rund 15 Minuten,
- für das Vollchargieren wenige Minuten (maximal 5 Minuten) und
- für das Schmelzen der Gesamtcharge nebst Refining rund 30 Minuten.

Die genannten Zeiten können selbstverständlich in gewissem Umfang von Basisteil 1 zu Basisteil 1 und auch von Anlagenzyklus zu Anlagenzyklus schwanken.

Bei Betrieb mit direkt reduziertem Eisen oder mit Roheisen hingegen fallen während eines jeweiligen Anlagenzyklus nur je eine der Phasen P1, P2 an.

Gemäß FIG 1 werden die heißen Abgase über ein Rohrleitungssystem 2 aus dem Basisteil 1 abgeführt und an die Außenluft abgegeben. Das Abführen der heißen Abgase erfolgt zu jedem Zeitpunkt in dem Umfang, zu dem die heißen Abgase jeweils anfallen, also in der ersten Phase P1 in großem Umfang, in der zweiten Phase P2 in geringem Umfang oder gar nicht.

Bevor die heißen Abgase an die Außenluft abgegeben werden, müssen sie gefiltert werden. Das Filtern erfolgt in einem Filter 3. Zum Zeitpunkt des Filterns darf die Temperatur der heißen Abgase maximal ca. 130 °C betragen. Es ist daher erforderlich, die heißen Abgase zu kühlen.

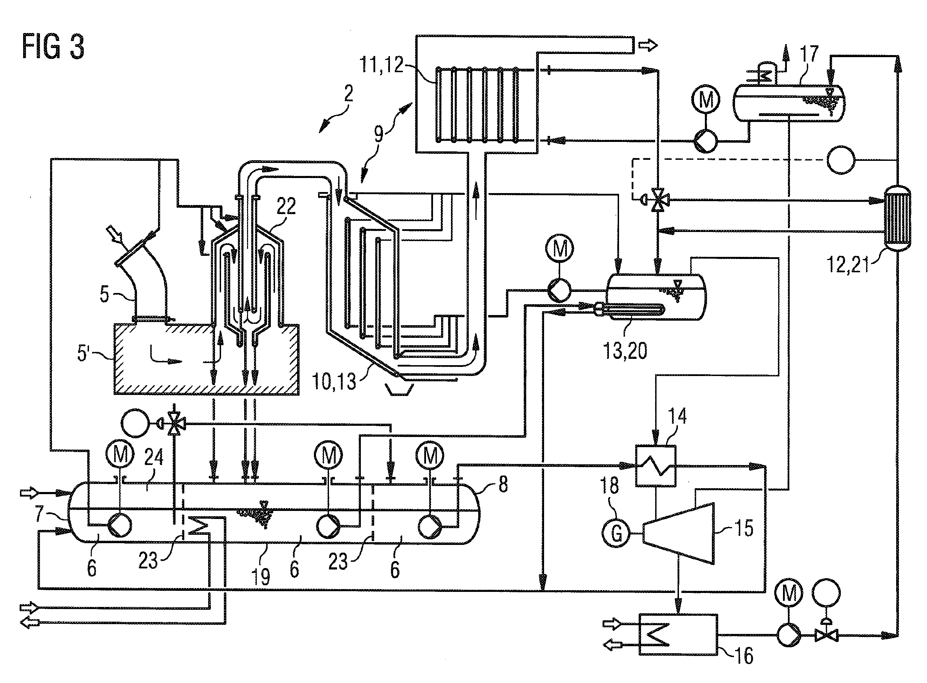

Das Kühlen erfolgt teilweise in einem Mischer 4, in dem die heißen Abgase mit Zuluft und/oder kalten Abgasen (Temperatur maximal 50 °C, in der Regel deutlich darunter) vermischt werden. Zuvor werden die heißen Abgase im Rohrleitungssystem 2 gekühlt. Dieser Teil der Anlage der Grundstoffindustrie ist auf erfindungsgemäße Weise ausgestaltet. Er wird nachfolgend in Verbindung mit FIG 3 näher erläutert.

Gemäß FIG 3 weist das Rohrleitungssystem 2 einen ersten Abschnitt 5 auf. Der erste Abschnitt 5 des Rohrleitungssystems 2 ist derjenige Abschnitt des Rohrleitungssystems 2, den die heißen Abgase nach dem Verlassen des Basisteils 1 zuerst durchströmen. Er ist in vielen Fällen als Krümmer ausgebildet (so genannter fixed elbow). Dem ersten Abschnitt 5 kann eine so genannte Drop-out-box 5' unmittelbar nachgeordnet sein. In der Drop-out-box 5' werden größere feste Rückstandspartikel ausgeschieden.

Der erste Abschnitt 5 des Rohrleitungssystems 2 wird mit geschmolzenem Salz 6 gekühlt. Zu diesem Zweck wird das geschmolzene Salz 6 einem ersten Tankbehälter 7 entnommen, dem ersten Abschnitt 5 des Rohrleitungssystems 2 zugeführt und dort zu dessen Kühlung verwendet. Danach wird das geschmolzene Salz 6 einem zweiten Tankbehälter 8 zugeführt.

Der erste Abschnitt 5 des Rohrleitungssystems 2 wird auf diese Weise gekühlt. Das zu diesem Zweck verwendete, geschmolzene Salz 6 wird dadurch selbstverständlich aufgeheizt. Das geschmolzene Salz 6 wird dem zweiten Tankbehälter 8 daher im aufgeheizten Zustand zugeführt. Die Temperatur des geschmolzenen Salzes 6 im zweiten Tankbehälter 8 liegt typischerweise oberhalb von 500 °C, beispielsweise bei 550 °C oder darüber. Eine Temperatur von 580 °C (für den zweiten Tankbehälter 8) sollte jedoch nur dann überschritten werden, wenn der erste Abschnitt 5 des Rohrleitungssystems 2 aus einem hinreichend temperaturfesten Material (beispielsweise MONEL oder INCONEL) besteht.

Das geschmolzene Salz 6 besteht vorzugsweise aus einem eutektischen Salzgemisch, da derartige Salzgemische einen relativ niedrigen Schmelzpunkt aufweisen. Vorzugsweise liegt der Schmelzpunkt bei ca. 150 °C oder darunter. Geeignete Salze sind Fachleuten allgemein bekannt.

Das Rohrleitungssystem 2 weist weiterhin einen zweiten Abschnitt 9 auf. Der zweite Abschnitt 9 des Rohrleitungssystems 2 ist derjenige Abschnitt des Rohrleitungssystems 2, den die heißen Abgase vor dem Zuführen zum Mischer 4 zuletzt durchströmen. Der zweite Abschnitt 9 ist in Bezug auf den Weg der heißen Abgase durch das Rohrleitungssystem 2 dem ersten Abschnitt 5 nachgeordnet.

Der zweite Abschnitt 9 ist im vorliegenden Fall als erste Verdampfereinrichtung 10 mit nachgeordneter erster Vorwärmeinrichtung 11 ausgebildet. Der Begriff nachgeordnet" bezieht sich hierbei auf den Weg der Abgase durch das Rohrleitungssystem 2. Der zweite Abschnitt 9 ist auf Grund des Vorhandenseins der ersten Verdampfereinrichtung 10 und der ersten Vorwärmeinrichtung 11 wassergekühlt. Er ist also insbesondere anders als mit geschmolzenem Salz 6 gekühlt.

Die erste Verdampfereinrichtung 10 besteht vorzugsweise aus Schottwänden, in denen das Wasser von unten nach oben strömt (bzw. oben als Dampf austritt). Die Durchströmungsrichtung für das heiße Abgas ist vorzugsweise im Gegenstrom, das heißt von oben nach unten.

Die erste Vorwärmeinrichtung 11 besteht vorzugsweise ebenfalls auch Schottwänden. Die Schottwände der ersten Vorwärmeinrichtung 11 werden vom Wasser vorzugsweise horizontal durchflossen. Die Strömungsrichtung für die heißen Abgase ist im Gegenstrom.

Die erfindungsgemäße Anlage der Grundstoffindustrie weist weiterhin einen Wasser-Dampf-Kreislauf auf. Der Wasser-Dampf-Kreislauf wird über die heißen Abgase erwärmt. Nachfolgend wird zunächst der Wasser-Dampf-Kreislauf als solcher erläutert. Sodann wird das Zusammenwirken des Wasser-Dampf-Kreislaufs mit dem Rohrleitungssystem 2 erläutert.

Der Wasser-Dampf-Kreislauf weist einen Vorwärmer 12 auf. Im Vorwärmer 12 wird kondensiertes Wasser vorgewärmt, das heißt auf Siedetemperatur oder knapp darunter. Hinter dem Vorwärmer 12 sollte die Temperatur des Wassers mindestens 90 °C betragen, besser 95 °C, optimal 98 °C bis 105 °C.

Das vorgewärmte Wasser wird einem Verdampfer 13 zugeführt, in dem das Wasser verdampft wird. Der entstehende Dampf ist so genannter Sattdampf. Er weist eine Temperatur von ca. 240 °C bis 280 °C auf.

Der Sattdampf wird einem Überhitzer 14 zugeführt, in dem der Sattdampf auf eine erheblich höhere Temperatur erhitzt wird. Die Temperatur des Dampfes nach dem Überhitzen sollte mindestens 50 Kelvin, vorzugsweise mindestens 100 Kelvin über der Sattdampftemperatur liegen. Insbesondere kann die Temperatur des Dampfes nach dem Überhitzer 14 bei ca. 450 °C liegen.

Der überhitzte Dampf wird einer Lasteinrichtung 15 zugeführt, in der die Energie des überhitzten Dampfes in mechanische Energie umgesetzt wird. Die Lasteinrichtung 15 ist in der Regel als Turbine ausgebildet. Falls erforderlich, kann zwischen dem Überhitzer 14 und der Lasteinrichtung 15 ein zusätzliches Heizelement angeordnet sein, mittels dessen der Dampf durch externe Wärmezufuhr zusätzlich erhitzbar ist. Dadurch kann die Lasteinrichtung 15 stets mit überhitztem Dampf betrieben werden.

Nach dem Durchströmen der Lasteinrichtung 15 wird der - nunmehr entspannte - Dampf in einem Kondensator 16 zu Wasser kondensiert und sodann wieder dem Vorwärmer 12 zugeführt. Zusätzlich kann ein Entgaser 17 vorhanden sein, in dem im Wasser enthaltene, nicht kondensierende Gase, insbesondere Luft und der in Luft enthaltene Sauerstoff, abgeschieden werden.

Die Lasteinrichtung 15 kann zwar - theoretisch - jederzeit stillgesetzt und wieder hochgefahren werden. In der Praxis ist dies jedoch nur umständlich und mit hohem Zeitaufwand möglich. Auch ein etwaiges Synchronisieren eines elektrischen Generators 18, welcher mittels der Lasteinrichtung 15 angetrieben wird, benötigt Zeit. In der Praxis ist es daher erforderlich, dass die Lasteinrichtung 15 kontinuierlich betrieben wird. Das Zuführen des überhitzten Dampfes zur Lasteinrichtung 15 muss also kontinuierlich erfolgen. Es ist jedoch möglich, dass die Last, mit der die Lasteinrichtung 15 betrieben wird, also die von der Lasteinrichtung 15 abgegebene mechanische Leistung, während der zweiten Phase P2 des Anlagenzyklus niedriger ist als die Last, mit der die Lasteinrichtung 15 während der ersten Phase P1 des Anlagenzyklus betrieben wird. Auch während der zweiten Phase P2 des Anlagenzyklus sollte die Last der Lasteinrichtung 15 jedoch mindestens 30 % der Last während der ersten Phase P1 des Anlagenzyklus betragen. Vor allem sollte der Generator 18 und mit ihm die Lasteinrichtung 15 (in der Regel die Turbine 15) während des gesamten Anlagenzyklus mit konstanter Drehzahl betrieben werden.

Für den Betrieb des Kondensators 16 und des Entgasers 17 (falls vorhanden) muss nicht zwischen dem Betrieb in der ersten Phase P1 des Anlagenzyklus und der zweiten Phase P2 des Anlagenzyklus unterschieden werden. Der Kondensator 16 wird immer mit relativ kaltem Wasser - typische Temperatur: 15 °C bis 30 °C - gekühlt. Gleiches gilt für den Entgaser 17, sofern er vorhanden ist.

Auch für den Überhitzer 14 muss nicht zwischen den beiden Phasen P1, P2 des Anlagenzyklus unterschieden werden. In beiden Phasen P1, P2 wird dem Überhitzer 14 geschmolzenes Salz 6 zugeführt, das dem zweiten Tankbehälter 8 entnommen wird. Mit diesem geschmolzenen Salz 6 wird der Sattdampf im Überhitzer 14 überhitzt.

Das geschmolzene Salz 6 weist nach dem Durchströmen des Überhitzers 14 eine Temperatur auf, die ca. 100 bis 200 Kelvin niedriger ist als zuvor. Das geschmolzene Salz 6 wird, nachdem es den Überhitzer 14 durchströmt hat, dem ersten Tankbehälter 7 oder (alternativ) einem dritten Tankbehälter 19 zugeführt. Wenn der dritte Tankbehälter 19 vorhanden ist, weist das im dritten Tankbehälter 19 befindliche geschmolzene Salz vorzugsweise ein Temperaturniveau zwischen 400 °C und 450 °C auf.

Für den Verdampfer 13 muss zwischen der ersten Phase P1 des Anlagenzyklus und der zweiten Phase P2 des Anlagenzyklus unterschieden werden. In der ersten Phase P1 des Anlagenzyklus, wenn also die heißen Abgase in großem Umfang entstehen, kann der zweite Abschnitt 9 des Rohrleitungssystems 2 zum Verdampfen des Wassers herangezogen werden. Die heißen Abgase, die den zweiten Abschnitt 9 des Rohrleitungssystems 2 durchströmen, sind zwar bereits im ersten Abschnitt 5 des Rohrleitungssystems 2 mittels des geschmolzenen Salzes 6 vorgekühlt worden. Sie sind aber noch immer heiß genug, um die erste Verdampfereinrichtung 10 zu betreiben, das vorgewärmte Wasser also zu verdampfen. In der zweiten Phase P2 des Anlagenzyklus hingegen muss die für das Verdampfen des Wassers erforderliche Energie durch das geschmolzene Salz 6 bereitgestellt werden. Der Verdampfer 13 weist daher zum einen die erste Verdampfereinrichtung 10 auf, die sich im zweiten Abschnitt 9 des Rohrleitungssystems 2 befindet. Zusätzlich weist der Verdampfer 13 eine zweite Verdampfereinrichtung 20 auf. Die zweite Verdampfereinrichtung 20 ist der ersten Verdampfereinrichtung 10 in Bezug auf den Wasser-Dampf-Kreislauf parallel geordnet. Weiterhin kann der Verdampfer 13 in der zweiten Phase P2 mit einem niedrigeren Dampfdruck betrieben werden als in der ersten Phase P1.

Die zweite Verdampfereinrichtung 20 wird mit geschmolzenem Salz 6 beheizt. Das geschmolzene Salz 6 wird dem zweiten Tankbehälter 8 oder - falls vorhanden - dem dritten Tankbehälter 19 entnommen und der zweiten Verdampfereinrichtung 20 zugeführt. Nach dem Durchströmen der zweiten Verdampfereinrichtung 20 wird es dem ersten Tankbehälter 7 zugeführt.

Der Vorwärmer 12 weist zusätzlich zur ersten Vorwärmeinrichtung 11 eine zweite Vorwärmeinrichtung 21 auf. Im Wasser-Dampf-Kreislauf ist die erste Vorwärmeinrichtung 11 dem Entgaser 17 nachgeordnet. Die zweite Vorwärmeinrichtung 21 ist dem Entgaser 17 vorgeordnet.

Während der ersten Phase P1 des Anlagenzyklus reicht die Restenergie der heißen Abgase hinter der ersten Verdampfereinrichtung 10 dazu aus, das Wasser vorzuwärmen. Aus diesem Grund ist der ersten Verdampfereinrichtung 10 die erste Vorwärmeinrichtung 11 in Bezug auf den Abgasstrom nachgeordnet.

Falls auch in der zweiten Phase P2 des Anlagenzyklus heiße Abgase entstehen - wenn auch nur in verringertem Umfang -, kann das Ausmaß an heißen Abgasen derart sein, dass es ausreicht, um auch in der zweiten Phase P2 des Anlagenzyklus das kondensierte Wasser vorzuwärmen. Alternativ ist es möglich, die erste Vorwärmeinrichtung 11 während der zweiten Phase P2 mit geschmolzenem Salz 6 zu beheizen. Die zweite Vorwärmeinrichtung 21 wird gemäß FIG 3 - zumindest in der ersten Phase P1 - mit Wasser beheizt, das zwischen der ersten Vorwärmeinrichtung 11 und dem Verdampfer 13 entnommen wird.

Alternativ ist es möglich, die erste und/oder die zweite Vorwärmeinrichtung 11, 21 in der zweiten Phase P2 des Anlagenzyklus nicht zu betreiben. In diesem Fall kann beispielsweise der Wasserpegel im Entgaser 17 zeitweise angehoben und der Wasserpegel in der zweiten Verdampfereinrichtung 20 entsprechend abgesenkt werden. In der nachfolgenden ersten Phase P1 erfolgt sodann wieder ein Rückführen der entsprechenden Pegel auf ihre ursprünglichen Werte.

Wenn der dritte Tankbehälter 19 vorhanden ist, wird das im dritten Tankbehälter 19 befindliche geschmolzene Salz 6 vorzugsweise zum Versorgen der zweiten Verdampfereinrichtung 20 mit der erforderlichen Wärmemenge verwendet. Es ist möglich, den dritten Tankbehälter 19 nur durch den Rücklauf an geschmolzenem Salz 6 zu speisen, mit dem der Überhitzer 14 beheizt wird. Es ist jedoch ein dritter Abschnitt 22 des Rohrleitungssystems 2 vorhanden, der zwischen dem ersten und dem zweiten Abschnitt 5, 9 des Rohrleitungssystems angeordnet ist. Der dritte Abschnitt 22 des Rohrleitungssystems 2 ist - ebenso wie der erste Abschnitt 5 des Rohrleitungssystems 2 - mit geschmolzenem Salz 6 gekühlt. Zu diesem Zweck wird dem ersten Tankbehälter 7 geschmolzenes Salz 6 entnommen und dem dritten Abschnitt 22 des Rohrleitungssystems 2 zugeführt. Die heißen Abgase werden dadurch auch dann gekühlt, wenn sie den dritten Abschnitt 22 des Rohrleitungssystems 2 durchströmen. Dementsprechend wird das hierzu verwendete geschmolzene Salz 6 aufgeheizt. Dieses geschmolzene Salz 6 wird sodann dem dritten Tankbehälter 19 zugeführt. Alternativ könnte es dem zweiten Tankbehälter 8 zugeführt werden.

Während der zweiten Phase P2 des Anlagenzyklus sinkt die Temperatur des geschmolzenen Salzes 6 im zweiten Tankbehälter 8 und gegebenenfalls auch im dritten Tankbehälter 19. Während der ersten Phase P1 des Anlagenzyklus steigt die Temperatur wieder an. Die maximale Schwankung der Temperatur des geschmolzenen Salzes 6 im jeweiligen Tankbehälter 8, 19 sollte vorzugsweise maximal 100 Kelvin betragen.

Das Abkühlen der heißen Abgase im dritten Abschnitt 22 und das hiermit verbundene Aufheizen des geschmolzenen Salzes 6 erfolgt in einem Wärmetauscher, der vorzugsweise als mehrzügiger Wärmetauscher ausgebildet ist. Vorzugsweise werden entsprechend der Darstellung von FIG 3 konzentrische, zylindrische Kühlflächen verwendet, wobei beide Seiten der Kühlflächen von den heißen Abgasen überstrichen werden. Der Wärmetauscher ist damit als so genannter dreizügiger Heißgaskühler ausgebildet, da die heißen Abgase in diesem Wärmetauscher zunächst nach oben, dann nach unten und schließlich wieder nach oben strömen.

Wie in FIG 3 gezeigt, können die Tankbehälter 7, 8 und gegebenenfalls 19 in einem gemeinsamen Gefäß angeordnet sein. In diesem Fall sind die Tankbehälter 7, 8 und gegebenenfalls 19 durch Schotte 23 voneinander getrennt. Alternativ können die Tankbehälter 7, 8 und gegebenenfalls 19 in separaten Gefäßen angeordnet sein. Unabhängig davon, ob eine Anordnung der Tankbehälter 7, 8 und gegebenenfalls 19 in einem gemeinsamen Gefäß oder in separaten Gefäßen erfolgt, sind die Tankbehälter 7, 8 und gegebenenfalls 19 jedoch tiefer angeordnet als der erste Abschnitt 5 des Rohrleitungssystems 2, der dritte Abschnitt 22 des Rohrleitungssystems 2 und der Überhitzer 14. Dadurch wird erreicht, dass die Leitungen zum Führen des geschmolzenen Salzes 6 auf einfache Weise entleerbar sind, falls dies erforderlich sein sollte. Die Tankbehälter 7, 8 und gegebenenfalls 19 können insbesondere als Unterflurtanks ausgebildet sein.

Weiterhin sind die Tankbehälter 7, 8 und gegebenenfalls 19 vorzugsweise zumindest in ihrem unteren Bereich und in ihrem oberen Bereich miteinander verbunden, so dass innerhalb der Tankbehälter 7, 8 und gegebenenfalls 19 ein selbsttätiger Niveauausgleich erfolgt. Schließlich ist dem geschmolzenen Salz 6 in den Tankbehältern 7, 8 und gegebenenfalls 19 vorzugsweise ein Inertgaspolster 24 (vorzugsweise ein Stickstoffpolster) überlagert.

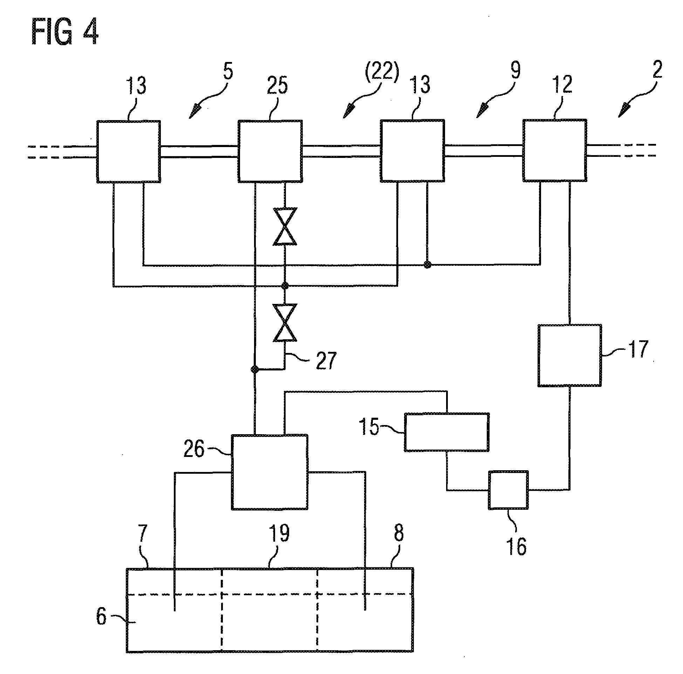

Oben stehend wurde in Verbindung mit FIG 3 eine Ausgestaltung des erfindungsgemäßen Betriebsverfahrens erläutert, bei der da geschmolzene Salz 6 direkt mit den heißen Abgasen aufgeheizt wird. Alternativ ist es möglich, das geschmolzene Salz 6 indirekt über Dampf zu erhitzen. Dies wird nachstehend kurz in Verbindung mit FIG 4 skizziert, wobei nur die wesentlichen Unterschiede zu dem Schema von FIG 3 erläutert werden.

Gemäß FIG 4 umfasst das Rohrleitungssystem 2 weiterhin den ersten, den zweiten und den dritten Rohrabschnitt 5, 9, 22 (in FIG 4 nur schematisch dargestellt). Der zweite Rohrabschnitt 9 umfasst, wie auch bei FIG 3, den Verdampfer 13 und den Vorwärmer 12. Der erste Rohrabschnitt 5 umfasst einen ersten Wärmetauscher 25, der mit Dampf aus einem Dampfspeicher betrieben wird. Der erste Wärmetauscher 25 wird in der ersten Phase P1 des Anlagenzyklus mittels der heißen Abgase erhitzt, so dass überhitzter Dampf entsteht.

Der erste Wärmetauscher 25 wirkt mit einem zweiten Wärmetauscher 26 zusammen. In der ersten Phase P1 des Anlagenzyklus wird über den zweiten Wärmetauscher 26 das geschmolzene Salz 6 erhitzt. Das geschmolzene Salz 6 fließt in diesem Betriebszustand vom ersten Tankbehälter 7 in den zweiten Tankbehälter 8.

Durch das Erhitzen des geschmolzenen Salzes 6 wird selbstverständlich der überhitzte Dampf abgekühlt. Dennoch ist der Dampf auch nach dem Durchströmen des zweiten Wärmetauschers 26 immer noch überhitzt, so dass er von dort aus der Turbine 15 zugeführt werden kann.

In der zweiten Phase P2 des Anlagenzyklus wird der erste Wärmetauscher 25 mittels einer Bypassleitung 27 überbrückt. Der Dampf wird dem zweiten Wärmetauscher 26 daher nicht mehr über den ersten Wärmetauscher 25, sondern direkt vom Verdampfer 13 (oder einem entsprechenden Speichergefäß, das vom Verdampfer 13 gespeist wird) zugeführt. Im zweiten Wärmetauscher 26 wird der Dampf überhitzt. Die Fließrichtung des geschmolzenen Salzes 6 wird zu diesem Zweck umgekehrt. Das geschmolzene Salz 6 fließt also in der zweiten Phase P2 vom zweiten Tankbehälter 8 in den ersten Tankbehälter 7 (oder alternativ in den dritten Tankbehälter 19).

Die vorliegende Erfindung weist viele Vorteile auf. Insbesondere ist die Anlage der Grundstoffindustrie relativ einfach aufgebaut. Die erfindungsgemäße Ausgestaltung ist leicht zu implementieren, zuverlässig und wirksam. Die vorliegende Erfindung ist insbesondere nicht nur mit kleinen Turbinen 15 und dementsprechend kleinen Generatoren 18 einsetzbar (Leistung maximal 2,5 Megawatt). Vielmehr ist die vorliegende Erfindung auch bei größeren Basisteilen 1 einsetzbar, bei denen im zeitlichen Mittel ca. 30 Megawatt thermische Leistung (oder sogar noch mehr) zur Verfügung stehen. In derartigen Fällen muss die Turbine 15 und mit ihr der Generator 18 für eine mechanische Leistung von ca. 10 Megawatt oder mehr ausgelegt sein. Auch weist die erfindungsgemäße Ausgestaltung einen hohen Wirkungsgrad auf. Die zu tätigenden Investitionen amortisieren sich in einem relativ kurzen Zeitraum von vier bis sechs Jahren. Im Falle eines Ausfalls der Lasteinrichtung 15 kann weiterhin der erzeugte Dampf über eine Bypassleitung direkt dem Kondensator 16 zugeführt werden.

Die vorliegende Erfindung wurde vorstehend mit einem als Lichtbogenofen ausgebildeten Basisteil 1 erläutert. Das Basisteil kann jedoch alternativ anders ausgebildet sein, insbesondere als Konverter.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

**Bezugszeichenliste**

| | |
|---|---|
| 1 | Basisteil |
| 2 | Rohrleitungssystem |
| 3 | Filter |
| 4 | Mischer |
| 5 | Erster Abschnitt |
| 5' | Drop out box |
| 6 | Geschmolzenes Salz |
| 7 | Erster Tankbehälter |
| 8 | Zweiter Tankbehälter |
| 9 | Zweiter Abschnitt |
| 10 | Verdampfereinrichtung |
| 11 | Erste Vorwärmeinrichtung |
| 12 | Vorwärmer |
| 13 | Verdampfer |
| 14 | Überhitzer |
| 15 | Lasteinrichtung |
| 16 | Kondensator |
| 17 | Entgaser |
| 18 | Generator |
| 19 | Dritter Tankbehälter |
| 20 | Zweite Verdampfereinrichtung |
| 21 | Zweite Vorwärmeinrichtung |
| 22 | Dritter Abschnitt |
| 23 | Schott |
| 24 | Inertgaspolster |
| 25 | Erster Wärmetauscher |
| 26 | Zweiter Wärmetauscher |
| 27 | Bypassleitung |

## Patentansprüche

1. Betriebsverfahren für eine Anlage der Grundstoffindustrie,
- wobei ein Basisteil (1) der Anlage gemäß einem Anlagenzyklus betrieben wird,
- wobei während der Anlagenzyklen in einer ersten Phase (P1) des jeweiligen Anlagenzyklus heiße Abgase entstehen und in einer zweiten Phase (P2) des jeweiligen Anlagenzyklus entweder keine heißen Abgase entstehen oder die heißen Abgase gegenüber der ersten Phase (P1) nur in erheblich verringertem Umfang entstehen,
- wobei die heißen Abgase in dem jeweiligen Umfang, in dem sie entstehen, über ein Rohrleitungssystem (2) aus dem Basisteil (1) der Anlage abgeführt und an die Außenluft abgegeben werden,
- wobei zumindest in der ersten Phase (P1) geschmolzenes Salz (6) einem ersten Tankbehälter (7) entnommen wird, sodann zum direkten oder indirekten Kühlen eines ersten Abschnitts (5) des Rohrleitungssystems (2) verwendet wird, das geschmolzene Salz (6) dadurch aufgeheizt wird und das geschmolzene Salz (6) im aufgeheizten Zustand einem zweiten Tankbehälter (8) zugeführt wird,
- wobei das Rohrleitungssystem (2) in einem zweiten Abschnitt (9) anders als mit geschmolzenem Salz (6) gekühlt wird,
- wobei der erste Abschnitt (5) des Rohrleitungssystems (2) zwischen dem Basisteil (1) der Anlage und dem zweiten Abschnitt (9) des Rohrleitungssystems (2) angeordnet ist,
- wobei in einem Verdampfer (13) vorgewärmtes Wasser verdampft, in einem Überhitzer (14) der Dampf überhitzt und der überhitzte Dampf einer Lasteinrichtung (15) zugeführt wird, der Dampf nach dem Durchströmen der Lasteinrichtung (15) in einem Kondensator (16) zu Wasser kondensiert wird und in einem Vorwärmer (12) das kondensierte Wasser vorgewärmt wird,
- wobei zumindest das Zuführen des überhitzten Dampfes zur Lasteinrichtung (15) kontinuierlich erfolgt,
- wobei zum Überhitzen des Dampfes zumindest in der zweiten Phase (P2) des Anlagenzyklus das geschmolzene Salz (6) dem zweiten Tankbehälter (8) entnommen wird, dem Überhitzer (14) zugeführt wird und sodann dem ersten Tankbehälter (7) oder einem dritten Tankbehälter (19) zugeführt wird,
- wobei zum Verdampfen des Wassers in der zweiten Phase (P2) des Anlagenzyklus das geschmolzene Salz (6) dem zweiten Tankbehälter (8) oder dem dritten Tankbehälter (19) entnommen wird, dem Verdampfer (13) zugeführt wird und sodann dem ersten Tankbehälter (7) zugeführt wird,
**dadurch gekennzeichnet,**
**dass** in der ersten Phase (P1) des Anlagenzyklus das Verdampfen des vorgewärmten Wassers mittels der den zweiten Abschnitt (9) des Rohrleitungssystems (2) durchströmenden, bereits mittels des geschmolzenen Salzes (6) direkt oder indirekt vorgekühlten Abgase erfolgt.

2. Betriebsverfahren nach Anspruch 1,
**dadurch gekennzeichnet,**
**dass** die Last der Lasteinrichtung (15) während der zweiten Phase (P2) des Anlagenzyklus niedriger ist als während der ersten Phase (P1) des Anlagenzyklus.

3. Betriebsverfahren nach Anspruch 2,
**dadurch gekennzeichnet,**
**dass** die Last der Lasteinrichtung (15) während der zweiten Phase (P2) des Anlagenzyklus mindestens 30 % der Last während der ersten Phase (P1) des Anlagenzyklus beträgt.

4. Betriebsverfahren nach Anspruch 1, 2 oder 3,
**dadurch gekennzeichnet,**
**dass** die Lasteinrichtung (15) als Turbine ausgebildet ist und dass die Turbine während des gesamten Anlagenzyklus mit konstanter Drehzahl betrieben wird.

5. Betriebsverfahren nach einem der obigen Ansprüche,
**dadurch gekennzeichnet,**
**dass** die Tankbehälter (7, 8, 19) tiefer angeordnet sind als der erste Abschnitt (5) des Rohrleitungssystems (2), der Verdampfer (13) und der Überhitzer (14).

6. Betriebsverfahren nach einem der obigen Ansprüche,
**dadurch gekennzeichnet,**
**dass** dem geschmolzenen Salz (6) in den Tankbehältern (7, 8, 19) ein Inertgaspolster (24) überlagert ist.

7. Betriebsverfahren nach einem der obigen Ansprüche,
**dadurch gekennzeichnet,**
**dass** die Tankbehälter (7, 8, 19) zumindest in ihrem unteren Bereich und in ihrem oberen Bereich miteinander verbunden sind, so dass innerhalb der Tankbehälter (7, 8, 19) ein selbsttätiger Niveauausgleich erfolgt.

8. Betriebsverfahren nach einem der obigen Ansprüche,
**dadurch gekennzeichnet,**
**dass** der Basisteil (1) der Anlage als elektrischer Lichtbogenofen oder als Konverter ausgebildet ist.

9. Betriebsverfahren nach einem der obigen Ansprüche,
**dadurch gekennzeichnet,**
**dass** der dritte Tankbehälter (19) vorhanden ist, dass geschmolzenes Salz (6) dem ersten Tankbehälter (7) entnommen und einem dritten Abschnitt (22) des Rohrleitungssystems (2) zugeführt wird, der zwischen dem ersten und dem zweiten Abschnitt (5, 9) des Rohrleitungssystems (2) angeordnet ist, dass dadurch das den dritten Abschnitt (22) durchströmende Abgas gekühlt und das geschmolzene Salz (6) aufgeheizt wird und dass dieses Salz (6) nach dem Aufheizen dem dritten Tankbehälter (19) zugeführt wird.

## Claims

1. Operating method for a plant in the basic materials industry,
- wherein a base part (1) of the plant is operated according to a plant cycle,
- wherein, during the plant cycles, in a first phase (P1) of each plant cycle hot exhaust gases are produced and in a second phase (P2) of each plant cycle either the hot exhaust gases are not produced or the hot exhaust gases are produced only to a considerably reduced extent compared with the first phase (P1),
- wherein the hot exhaust gases, to the extent that they are produced in each case, are removed from the base part (1) of the plant by way of a pipeline system (2) and discharged to the outside air,
- wherein, at least in the first phase (P1), molten salt (6) is removed from a first tank vessel (7), is then used for the direct or indirect cooling of a first portion (5) of the pipeline system (2), the molten salt (6) is heated up as a result, and the molten salt (6) is fed in the heated-up state to a second tank vessel (8),
- wherein the pipeline system (2) is cooled in a second portion (9) otherwise than by molten salt (6),
- wherein the first portion (5) of the pipeline system (2) is arranged between the base part (1) of the plant and the second portion (9) of the pipeline system (2),
- wherein in an evaporator (13) preheated water is evaporated, in a superheater (14) the steam is superheated, and the superheated steam is fed to a load device (15), after flowing through the load device (15) the steam is condensed into water in a condenser (16), and the condensed water is preheated in a preheater (12),
- wherein at least the feeding of the superheated steam to the load device (15) takes place continuously,
- wherein for the superheating of the steam, at least in the second phase (P2) of the plant cycle, the molten salt (6) is removed from the second tank vessel (8), is fed to the superheater (14) and is then fed to the first tank vessel (7) or a third tank vessel (19),
- wherein for evaporating the water, in the second phase (P2) of the plant cycle the molten salt (6) is removed from the second tank vessel (8) or the third tank vessel (19), is fed to the evaporator (13) and is then fed to the first tank vessel (7),
**characterised in that**
in the first phase (P1) of the plant cycle, the evaporation of the preheated water takes place by means of the exhaust gases that are flowing through the second portion (9) of the pipeline system (2) and have already been directly or indirectly precooled by means of the molten salt (6).

2. Operating method according to claim 1,
**characterised in that**
the load of the load device (15) is lower during the second phase (P2) of the plant cycle than during the first phase (P1) of the plant cycle.

3. Operating method according to claim 2,
**characterised in that**
the load of the load device (15) during the second phase (P2) of the plant cycle is at least 30% of the load during the first phase (P1) of the plant cycle.

4. Operating method according to claim 1, 2 or 3,
**characterised in that**
the load device (15) is embodied as a turbine and **in that** the turbine is operated at a constant rotational speed throughout the plant cycle.

5. Operating method according to any one of the preceding claims,
**characterised in that**
the tank vessels (7, 8, 19) are arranged lower than the first portion (5) of the pipeline system (2), the evaporator (13) and the superheater (14).

6. Operating method according to any one of the preceding claims,
**characterised in that**
the molten salt (6) in the tank vessels (7, 8, 19) is overlaid by an inert-gas pad (24).

7. Operating method according to any one of the preceding claims,
**characterised in that**
the tank vessels (7, 8, 19) are connected to one another at least in their lower region and in their upper region, such that inside the tank vessels (7, 8, 19) automatic adjustment of levels takes place.

8. Operating method according to any one of the preceding claims,
**characterised in that**
the base part (1) of the plant is embodied as an electric arc furnace or as a converter.

9. Operating method according to any one of the preceding claims,
**characterised in that**
the third tank vessel (19) is present, **in that** molten salt (6) is removed from the first tank vessel (7) and fed to a third portion (22) of the pipeline system (2), said third portion being arranged between the first and the second portion (5, 9) of the pipeline system (2), **in that** the exhaust gas that flows through the third portion (22) is cooled and the molten salt (6) heated up as a result, and **in that** this salt (6) is fed, after heating up, to the third tank vessel (19).

## Revendications

1. Procédé d'exploitation pour une installation de l'industrie des matières premières,
- dans lequel on exploite une partie de base (1) de l'installation suivant un cycle de l'installation,
- dans lequel, pendant les cycles de l'installation, il apparaît des gaz d'échappement chauds dans une première phase (P1) de chaque cycle de l'installation et, dans une deuxième phase (P2) de chaque cycle de l'installation, soit il n'apparaît pas de gaz d'échappement chauds soit les gaz d'échappement chauds n'apparaissent qu'en une quantité fortement réduite par rapport à la première phase (P1),
- dans lequel on évacue les gaz d'échappement chauds, avec la quantité dans laquelle ils apparaissent, par un système de canalisations (2) hors de la partie de base (1) de l'installation et on les rejette dans l'air extérieur,
- dans lequel, au moins dans la première phase (P1), on prélève du sel fondu (6) hors d'un premier réservoir (7), puis on l'utilise pour le refroidissement direct ou indirect d'une première section (5) du système de canalisations (2), le sel fondu (6) est ainsi chauffé et le sel fondu (6) est envoyé à l'état chauffé à un deuxième réservoir (8),
- dans lequel on refroidit le système de canalisations (2) dans une deuxième section (9), autrement qu'avec un sel fondu (6),
- dans lequel la première section (5) du système de canalisations (2) est disposée entre la partie de base (1) de l'installation et la deuxième section (9) du système de canalisations (2),
- dans lequel on vaporise de l'eau préchauffée dans un évaporateur (13), on surchauffe la vapeur dans un surchauffeur (14) et on envoie la vapeur surchauffée à un dispositif de charge (15), on condense la vapeur en eau dans un condenseur (16) après qu'elle ait traversé le dispositif de charge (15) et on réchauffe l'eau condensée dans un réchauffeur (12),
- dans lequel on effectue en continu au moins l'envoi de la vapeur surchauffée au dispositif de charge (15),
- dans lequel on prélève le sel fondu (6) hors du deuxième réservoir (8) pour la surchauffe de la vapeur au moins dans la deuxième phase (P2) du cycle de l'installation, on l'envoie au surchauffeur (14) puis on l'envoie au premier réservoir (7) ou à un troisième réservoir (19),
- dans lequel on prélève le sel fondu (6) hors du deuxième réservoir (8) ou du troisième réservoir (19) pour la vaporisation de l'eau dans la deuxième phase (P2) du cycle de l'installation, on l'envoie à l'évaporateur (13) puis on l'envoie au premier réservoir (7),
**caractérisé en ce que**, dans la première phase (P1) du cycle de l'installation, on effectue la vaporisation de l'eau préchauffée au moyen des gaz d'échappement traversant la deuxième section (9) du système de canalisations (2) et déjà pré-refroidis directement ou indirectement au moyen du sel fondu (6).

2. Procédé d'exploitation selon la revendication 1, **caractérisé en ce que** la charge du dispositif de charge (15) pendant la deuxième phase (P2) du cycle de l'installation est inférieure à la charge pendant la première phase (P1) du cycle de l'installation.

3. Procédé d'exploitation selon la revendication 2, **caractérisé en ce que** la charge du dispositif de charge (15) pendant la deuxième phase (P2) du cycle de l'installation vaut au moins 30 % de la charge pendant la première phase (P1) du cycle de l'installation.

4. Procédé d'exploitation selon la revendication 1, 2 ou 3, **caractérisé en ce que** le dispositif de charge (15) est constitué par une turbine et **en ce que** la turbine fonctionne avec une vitesse de rotation constante pendant tout le cycle de l'installation.

5. Procédé d'exploitation selon l'une quelconque des revendications précédentes, **caractérisé en ce que** les réservoirs (7, 8, 19) sont disposés plus bas que la première section (5) du système de canalisations (2), que l'évaporateur (13) et que le surchauffeur (14).

6. Procédé d'exploitation selon l'une quelconque des revendications précédentes, **caractérisé en ce que** l'on superpose un tampon de gaz inerte (24) au-dessus du sel fondu (6) dans les réservoirs (7, 8, 19).

7. Procédé d'exploitation selon l'une quelconque des revendications précédentes, **caractérisé en ce que** les réservoirs (7, 8, 19) sont reliés les uns aux autres au moins dans leur région inférieure et dans leur région supérieure, de telle manière qu'il s'établisse une compensation automatique du niveau à l'intérieur des réservoirs (7, 8, 19).

8. Procédé d'exploitation selon l'une quelconque des revendications précédentes, **caractérisé en ce que** la partie de base (1) de l'installation est constituée par un four à arc électrique ou par un convertisseur.

9. Procédé d'exploitation selon l'une quelconque des revendications précédentes, **caractérisé en ce que** le troisième réservoir (19) est présent, **en ce que** l'on prélève du sel fondu (6) hors du premier réservoir (7) et on l'envoie à une troisième section (22) du système de canalisations (2), qui est disposée entre la première section et la deuxième section (5, 9) du système de canalisations (2), **en ce que** l'on refroidit ainsi les gaz d'échappement traversant la troisième section (22) et on réchauffe le sel fondu (6), et **en ce que** l'on envoie ce sel (6) après le réchauffage au troisième réservoir (19).
